# EUROPEAN PATENT APPLICATION

(11) **EP 3 875 891 A1**
(43) Date of publication of application: **08.09.2021**
(21) Application number: 19877934.0
(22) Date of filing: 09.10.2019
(51) Int. Cl.: G01B 11/00, E01B 19/00, E01D 19/10, E01D 22/00, E01F 8/00, E04B 1/82, E04G 23/02, G06T 7/00

(54) **INSPECTION DEVICE AND INSPECTION METHOD**

(30) Priority: 29.10.2018 JP 2018203308
(71) Applicant: Panasonic Intellectual Property Management Co., Ltd., Osaka-shi, Osaka 540-6207 (JP)
(72) Inventor: MARUYAMA, Yuki, Osaka-shi, Osaka 540-6207 (JP); KUSAKA, Hiroya, Osaka-shi, Osaka 540-6207 (JP); IMAGAWA, Taro, Osaka-shi, Osaka 540-6207 (JP); NODA, Akihiro, Osaka-shi, Osaka 540-6207 (JP)
(74) Representative: Vigand, Philippe
(86) International application number: PCT/JP2019/039821
(87) International publication number: WO 2020/090393

(57) **Abstract**

An inspection device (100) includes: an obtainer (10) that obtains at least one captured image of a plurality of sound insulation plates (1); a deriver (20) that derives a displacement of each of the plurality of sound insulation plates (1) in the image; and an extractor (40) that, based on the displacements of the plurality of sound insulation plates (1), extracts, from the plurality of sound insulation plates (1), a sound insulation plate of interest that moves differently from another sound insulation plate (1) included in the plurality of sound insulation plates (1).

## Description

### TECHNICAL FIELD

The present disclosure relates to an inspection device and an inspection method that inspect a sound insulation plate.

### BACKGROUND ART

PTL 1, for example, discloses an examination method and an examination device that examine looseness in bolts that secure a structure.

### Citation List

### Patent Literature

PTL 1: Japanese Unexamined Patent Application Publication No. 8-278116

### SUMMARY OF THE INVENTION

### TECHNICAL PROBLEMS

However, according to the bolt looseness examination method and examination device disclosed in PTL 1, it is difficult to inspect the looseness of a bolt to be examined if there is no reference information indicating a properly-tightened state of the bolt.

For example, for a sound insulation wall, there are cases where it is difficult to identify a proper state. Therefore, it is not easy to inspect whether or not the sound insulation wall is in a proper state.

Additionally, inspections of infrastructure structures are performed manually, exclusively by specialized workers. For example, sound insulation plates installed on highways or viaducts are inspected by workers manually in the presence of traffic such as vehicles or trains, which is highly likely to be dangerous. Additionally, because workers manually inspect multiple sound insulation plates, the inspection process takes a long time.

Accordingly, the present disclosure provides an inspection device and an inspection method which make it possible to easily inspect sound insulation plates.

### SOLUTIONS TO PROBLEMS

An inspection device according to one aspect of the present disclosure includes: an obtainer that obtains at least one captured image of a plurality of sound insulation plates; a deriver that derives a displacement of each of the plurality of sound insulation plates in the image; and an extractor that, based on the displacements of the plurality of sound insulation plates, extracts, from the plurality of sound insulation plates, a sound insulation plate of interest that moves differently from another sound insulation plate included in the plurality of sound insulation plates.

Note that these comprehensive or specific aspects may be realized by a system, a method, an integrated circuit, a computer program, or a recording medium such as a computer-readable recording disc, or may be implemented by any desired combination of systems, methods, integrated circuits, computer programs, or recording media. The computer-readable recording medium includes, for example, a non-volatile recording medium such as a CD-ROM (Compact Disc Read-Only Memory). Additional benefits and advantages of one aspect of the present disclosure will be evident from the present specification and the drawings. These benefits and/or advantages can be provided individually by various embodiments and features disclosed in the present specification and the drawings, and not all are necessary to achieve one or more of the benefits and/or advantages.

### ADVANTAGEOUS EFFECT OF INVENTION

The inspection device and inspection method according to the present disclosure make it possible to easily inspect sound insulation plates.

### BRIEF DESCRIPTION OF DRAWINGS

FIG. 1 is a schematic diagram illustrating an example of the configuration of an inspection system according to Embodiment 1.
FIG. 2 is a block diagram illustrating an example of the functional configuration of an inspection device according to Embodiment 1.
FIG. 3 is a flowchart illustrating an example of operations performed by the inspection device according to Embodiment 1.
FIG. 4 is a diagram illustrating an example of an image capturing device capturing an image of a plurality of sound insulation plates.
FIG. 5 is a diagram illustrating an example of timeseries data of a displacement of each of a plurality of sound insulation plates when shift among the displacements of the sound insulation plates is corrected.
FIG. 6 is a flowchart illustrating an example of the detailed flow of processing included in an extraction step indicated in FIG. 3.
FIG. 7 is a diagram illustrating an example of a difference between a displacement of one sound insulation plate among a plurality of sound insulation plates and an average value of displacements of the plurality of sound insulation plates.
FIG. 8 is a flowchart illustrating another example of the detailed flow of processing included in the extraction step indicated in FIG. 3.
FIG. 9 is a diagram illustrating an example of a degree of correlation among displacements of a plurality of sound insulation plates.
FIG. 10 is a block diagram illustrating an example of the functional configuration of an inspection device according to Embodiment 2.
FIG. 11 is a flowchart illustrating an example of operations performed by the inspection device according to Embodiment 2.

### DESCRIPTION OF EXEMPLARY EMBODIMENTS

### Overview of the Present Disclosure

An overview of one aspect of the present disclosure is as follows.

An inspection device according to one aspect of the present disclosure includes: an obtainer that obtains at least one captured image of a plurality of sound insulation plates; a deriver that derives a displacement of each of the plurality of sound insulation plates in the image; and an extractor that, based on the displacements of the plurality of sound insulation plates, extracts, from the plurality of sound insulation plates, a sound insulation plate of interest that moves differently from another sound insulation plate included in the plurality of sound insulation plates.

Through this, the inspection device can detect relative movement in each sound insulation plate among the plurality of sound insulation plates, from at least one image captured of the plurality of sound insulation plates. Accordingly, based on a displacement of each sound insulation plate in the image, the inspection device can extract, from the plurality of sound insulation plates, a sound insulation plate of interest that moves differently from another sound insulation plate, as a defective sound insulation plate. As such, the inspection device according to one aspect of the present disclosure can easily inspect a plurality of sound insulation plates.

For example, in an inspection device according to one aspect of the present disclosure, the deriver may further derive a representative value of the displacements of the plurality of sound insulation plates, and the extractor may extract, from the plurality of sound insulation plates, a sound insulation plate having a displacement different from the representative value by at least a threshold, as the sound insulation plate of interest.

Through this, the inspection device can find a difference between the displacement of each of the plurality of sound insulation plates and a representative value, and can compare that difference to a threshold. As such, the inspection device according to one aspect of the present disclosure can easily extract a sound insulation plate of interest from the plurality of sound insulation plates, based on the displacement of each of the plurality of sound insulation plates.

For example, in an inspection device according to one aspect of the present disclosure, the representative value may be an average value or a median value of the displacements of the plurality of sound insulation plates, and the threshold may be determined based on a standard deviation of the displacements of the plurality of sound insulation plates.

Through this, the inspection device can easily and without complicated calculations derive the representative value of the displacements of the plurality of sound insulation plates and the threshold. This reduces the amount of processing performed by the inspection device and increases the speed of the processing performed by the inspection device.

For example, in an inspection device according to one aspect of the present disclosure, based on a cross-correlation of the displacements of the plurality of sound insulation plates, the extractor may extract, as the sound insulation plate of interest, a sound insulation plate having a degree of correlation with the displacement of another sound insulation plate that is less than a threshold.

Through this, the inspection device can compare a similarity of a plurality of sound insulation plates. As such, the inspection device according to one aspect of the present disclosure can easily extract a sound insulation plate of interest from the plurality of sound insulation plates, based on the displacement of each of the plurality of sound insulation plates.

For example, in an inspection device according to one aspect of the present disclosure, the image may be an image captured in a period including a time when a predetermined external load is acting on the plurality of sound insulation plates.

Through this, each of the plurality of sound insulation plates displaces sufficiently, which improves the accuracy at which the sound insulation plate of interest is extracted from the plurality of sound insulation plates.

For example, in an inspection device according to one aspect of the present disclosure, the deriver may derive the displacement of each of the plurality of sound insulation plates from two or more frames included in the image.

Through this, the displacement of each of a plurality of regions can be appropriately derived using two or more frames which differ in terms of time.

For example, an inspection device according to one aspect of the present disclosure may further include a scale corrector that, in accordance with a distance from an image capturer that captures the image, corrects a scale of the displacement of each of the plurality of sound insulation plates so as to reflect a ratio of a distance by which each of the plurality of sound insulation plates has actually been displaced; and the extractor may extract the sound insulation plate of interest using the displacement of each of the plurality of sound insulation plates whose scales have been corrected.

Through this, the inspection device can more accurately derive the displacement of each of the plurality of sound insulation plates. Additionally, by having the above-described configuration, the inspection device uses a corrected displacement, which makes it possible to more accurately extract the sound insulation plate of interest from the plurality of sound insulation plates.

Additionally, an inspection method according to one aspect of the present disclosure includes: obtaining at least one captured image of a plurality of sound insulation plates; deriving a displacement of each of the plurality of sound insulation plates in the image; and extracting, from the plurality of sound insulation plates, and based on the displacements of the plurality of sound insulation plates, a sound insulation plate of interest that moves differently from another sound insulation plate included in the plurality of sound insulation plates.

Through this, relative movement in each sound insulation plate among the plurality of sound insulation plates can be detected, from at least one image captured of the plurality of sound insulation plates. Thus according to the inspection method, based on a displacement of each sound insulation plate in the image, it is possible to extract, from the plurality of sound insulation plates, a sound insulation plate of interest that moves differently from another sound insulation plate, as a defective sound insulation plate. As such, the inspection method according to one aspect of the present disclosure makes it possible to easily inspect a plurality of sound insulation plates.

Note that these comprehensive or specific aspects may be realized by a system, an apparatus, a method, an integrated circuit, a computer program, or a non-transitory recording medium such as a computer-readable recording disc, or may be implemented by any desired combination of systems, apparatuses, methods, integrated circuits, computer programs, or recording media. The computer-readable recording medium includes, for example, a non-volatile recording medium such as a CD-ROM. Additionally, the apparatus may be constituted by one or more sub-apparatuses. If the apparatus is constituted by two or more sub-apparatuses, the two or more apparatuses may be disposed within a single device, or may be distributed between two or more distinct devices. In the present specification and the scope of claims, "apparatus" can mean not only a single apparatus, but also a system constituted by a plurality of sub-apparatuses.

An inspection device and an inspection method according to the present disclosure will be described hereinafter in detail with reference to the drawings.

Note that the following embodiments describe comprehensive or specific examples of the present disclosure. The numerical values, shapes, constituent elements, arrangements and connection states of constituent elements, steps (processes), orders of steps, and the like in the following embodiments are merely examples, and are not intended to limit the present disclosure. Additionally, of the constituent elements in the following embodiments, constituent elements not denoted in the independent claims, which express the broadest interpretation, will be described as optional constituent elements.

In the following descriptions of embodiments, the expression "substantially", such as "substantially identical", may be used. For example, "substantially identical" means that primary parts are the same, that two elements have common properties, or the like.

Additionally, the drawings are schematic diagrams, and are not necessarily exact illustrations. Furthermore, constituent elements that are substantially the same are given the same reference signs in the drawings, and redundant descriptions may be omitted or simplified.

### EMBODIMENT 1

An inspection device and the like according to Embodiment 1 will be described hereinafter.

### 1-1. Overview of Inspection System

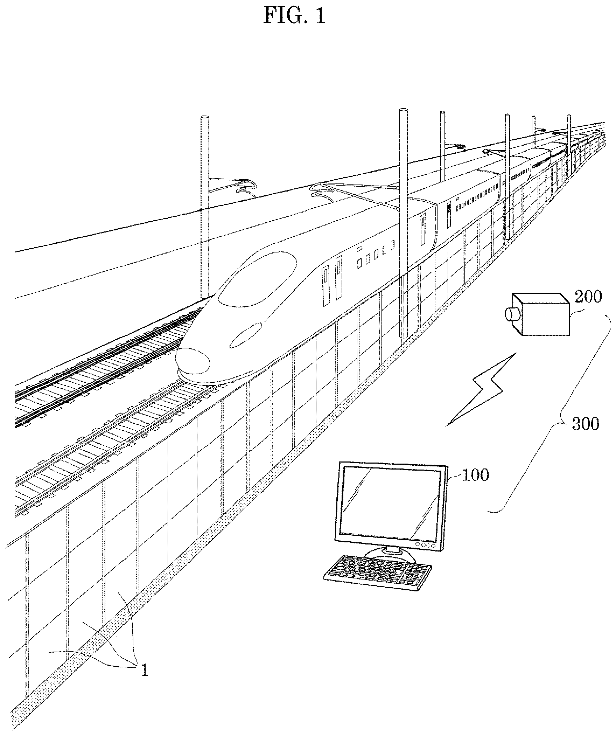

First, an overview of an inspection system according to Embodiment 1 will be described in detail with reference to FIG. 1. FIG. 1 is a schematic diagram illustrating an example of inspection system 300 according to Embodiment 1.

Inspection system 300 is a system for capturing an image of a plurality of sound insulation plates 1, and based on a displacement of each of the plurality of sound insulation plates 1 in the image, extracting a sound insulation plate 1 of interest that moves differently from another sound insulation plate 1 among the plurality of sound insulation plates 1, as a defective sound insulation plate.

Sound insulation plate 1 is not particularly limited to any structure as long as the structure has a function of reducing sound passing through itself, and may be, for example, a sound insulation panel, a sound insulation wall, a sound absorption plate, a sound absorption panel, a sound absorption wall, a soundproof plate, a soundproof panel, a soundproof wall, soundproof glass, or the like. Sound insulation plate 1 may also be a common panel, wall, plate, or the like which is not described as having a soundproofing function, a sound insulating function, or a sound absorption function in the product specifications. Sound insulation plate 1 is installed in an infrastructure structure such as a road, a railroad track, a viaduct, a building, or the like, for example.

Here, the displacement of sound insulation plate 1 includes at least one of a change in the shape of sound insulation plate 1 and a movement amount of a center position of sound insulation plate 1. A change in the shape of sound insulation plate 1 is expressed by, for example, an amount of spatial movement over time in each of a plurality of measurement points set for each sound insulation plate 1. The movement amount of the center position of sound insulation plate 1 is expressed by, for example, a vibration waveform of the center position of each sound insulation plate 1 or a motion vector indicating motion. A specific example of the displacement and a method for calculating the displacement will be described later.

As illustrated in FIG. 1, inspection system 300 includes inspection device 100 and image capturing device 200. Each device will be described hereinafter.

### 1-1-1. Image Capturing Device

Image capturing device 200 is a digital video camera or a digital still camera including an image sensor, for example. Image capturing device 200 captures an image of a plurality of sound insulation plates 1. In other words, image capturing device 200 captures an image of the plurality of sound insulation plates 1 so that a single image contains the plurality of sound insulation plates 1. At this time, image capturing device 200 captures the image of a state in which there is displacement in the plurality of sound insulation plates 1. For example, image capturing device 200 captures an image of the plurality of sound insulation plates 1 in a period including a time in which a predetermined external load is acting on the plurality of sound insulation plates 1.

Here, the predetermined external load may be, for example, wind pressure produced by a moving object such as a vehicle or a train as the moving object passes, sound emitted from a sound source, vibrations produced by a device such as a vibration generator, or the like. "Predetermined" is not limited to a constant magnitude and constant direction, and may include situations where the magnitude or direction changes. In other words, the magnitude and direction of the external load acting on the plurality of sound insulation plates 1 may be constant or varied. For example, when the predetermined external load is wind pressure produced by a passing moving object, the wind pressure acting on the plurality of sound insulation plates 1 when the moving object has approached the plurality of sound insulation plates 1 captured by image capturing device 200 rises rapidly, reaches a maximum while the vehicle is passing, and decreases rapidly immediately after the passage. In this manner, the predetermined external load acting on the plurality of sound insulation plates 1 may vary while the image is being captured of the plurality of sound insulation plates 1. Additionally, for example, when the predetermined external load is vibrations produced by a device such as a vibration generator, the vibrations acting on the plurality of sound insulation plates 1 captured by image capturing device 200 may be vibrations having a constant magnitude and an amplitude in a constant direction. In this manner, the predetermined external load acting on the plurality of sound insulation plates 1 may be constant while the image is being captured of the plurality of sound insulation plates 1.

Although FIG. 1 illustrates an example in which inspection system 300 includes a single image capturing device 200, two or more image capturing devices 200 may be included. For example, the two or more image capturing devices 200 may be disposed in sequence along a series of the plurality of sound insulation plates 1. This makes it possible to capture more sound insulation plates 1 at once than when capturing an image using a single image capturing device 200, which improves the efficiency of the inspection. Additionally, for example, the two or more image capturing devices 200 may be disposed non-sequentially at different points along a series of the plurality of sound insulation plates 1. In this case, the plurality of sound insulation plates 1 at the different points are captured during a period including a time when the predetermined external load acts on each of sound insulation plates 1 under substantially identical conditions, and are constituted by substantially identical materials and structures. Through this, for example, the plurality of sound insulation plates 1 disposed at different points where a vehicle or a train travels, such as a point A and a point B, can be inspected at the same time, which improves the efficiency.

Note that image capturing device 200 is not limited to the above-described example, and may be, for example, a rangefinding camera, a stereo camera, or a TOF (Time-Of-Flight) camera. Through this, inspection device 100 can detect motion in the plurality of sound insulation plates 1 in three dimensions, which makes it possible to extract a defective sound insulation plate more accurately.

### 1-1-2. Inspection Device

Inspection device 100 is a device for extracting a sound insulation plate 1 of interest that moves differently from another sound insulation plate 1 among the plurality of sound insulation plates 1, as a defective sound insulation plate. Inspection device 100 is, for example, a computer, and includes a processor (not shown) and memory (not shown) which stores a software program or instructions. Inspection device 100 realizes a plurality of functions, which will be described later, by the processor executing the software program. Additionally, inspection device 100 may be constituted by a dedicated electronic circuit (not shown). In this case, the plurality of functions which will be described later may be realized by individual electronic circuits, or as a single integrated electronic circuit.

As illustrated in FIG. 1, inspection device 100 is, for example, communicably connected to image capturing device 200. At this time, the method of the communication between inspection device 100 and image capturing device 200 may be wireless communication such as Bluetooth (registered trademark), or wired communication such as Ethernet (registered trademark). Note that inspection device 100 and image capturing device 200 need not be communicably connected. For example, inspection device 100 may obtain a plurality of images from image capturing device 200 via removable memory, e.g., USB (Universal Serial Bus) memory.

Inspection device 100 obtains at least one image captured of the plurality of sound insulation plates 1 from image capturing device 200, derives a displacement of each of the plurality of sound insulation plates 1 in the obtained image, and based on the displacement of each of the plurality of sound insulation plates 1, extracts, from the plurality of sound insulation plates 1, a sound insulation plate 1 of interest that moves differently from another sound insulation plate 1 among the plurality of sound insulation plates 1. At this time, inspection device 100 extracts the sound insulation plate of interest as a defective sound insulation plate, and stores information based on the extraction result of that sound insulation plate 1 in memory (not shown) in association with data such as location information in the image captured of that sound insulation plate 1. Through this, a user of inspection device 100 can read out information based on the extraction result from the memory (not shown) at a desired timing. At this time, inspection device 100 presents the information based on the extraction result in a presenter (not shown) based on a user operation input to an inputter (not shown). The inputter (not shown) is, for example, a keyboard, a mouse, a touch panel, a microphone, or the like. The display (not shown) is, for example, a display device, a speaker, or the like. Note that inspection device 100 may or may not include the inputter (not shown) and the display (not shown). The inputter and the presenter may be provided in another device aside from inspection device 100, for example. Additionally, although inspection device 100 has been described as a computer as an example, inspection device 100 may be provided in a server connected over a communication network such as the Internet.

1-2. Configuration of Inspection Device

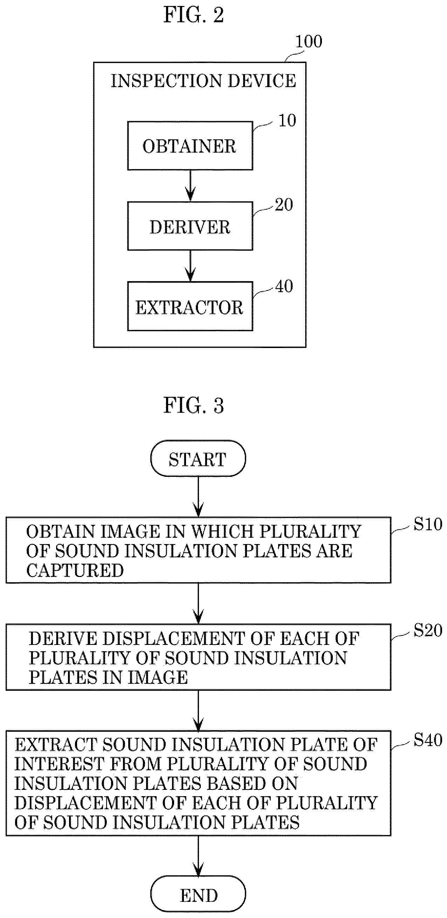

The functional configuration of inspection device 100 according to Embodiment 1 will be described next with reference to FIG. 2. FIG. 2 is a block diagram illustrating an example of the functional configuration of inspection device 100 according to Embodiment 1.

As illustrated in FIG. 2, inspection device 100 includes obtainer 10, deriver 20, and extractor 40.

Obtainer 10 obtains at least one image captured of the plurality of sound insulation plates 1 (see FIG. 1). Note that from the standpoint of improving the inspection accuracy, the image may be an image captured during the time including a time in which the predetermined external load is acting on the plurality of sound insulation plates 1. To be more specific, the image may be an image including at least one of a period during which an external load is acting on the plurality of sound insulation plates 1, and a period before/after that period, in which an external load is not acting on the plurality of sound insulation plates 1. For example, referring again to FIG. 1, the image is an image spanning from immediately before the first car of a train approaches one end of a series of the plurality of sound insulation plates 1 to after the last car of the train finishes passing the other end of the series of the plurality of sound insulation plates 1. At this time, the external load acting on the plurality of sound insulation plates 1 is wind pressure produced by the passage of the train.

The image obtained by obtainer 10 may be, for example, a single image captured of the plurality of sound insulation plates 1, a plurality of images in which a series of the plurality of sound insulation plates 1 are captured in sequence, or a plurality of images in which a series of the plurality of sound insulation plates 1 are captured non-sequentially.

Note that obtainer 10 obtains the at least one image captured of the plurality of sound insulation plates 1 from image capturing device 200 through wireless communication, for example. However, obtainer 10 may obtain the at least one image captured of the plurality of sound insulation plates 1 from image capturing device 200 through removable memory such as USB memory.

Deriver 20 derives the displacement of each of the plurality of sound insulation plates 1 in the image obtained by obtainer 10. The image may, for example, be an image captured during the time including a time in which the predetermined external load is acting on the plurality of sound insulation plates 1. The displacement of each sound insulation plate 1 may be derived using a known method. The method for deriving the displacement may use, for example, a correlation method such as block matching, normalized cross correlation, and phase correlation, a sampling moiré method, a feature point extraction method (e.g., edge extraction), laser speckle correlation, or the like. The precision of the displacement derivation may be at the pixel level or at the subpixel level. Here, the displacement may be a displacement in the image.

Deriver 20 further derives a representative value of the displacements of the plurality of sound insulation plates 1. The representative value may be an average value or a median value of the displacements of the plurality of sound insulation plates 1. Note that the representative value may be a robust estimation value of the displacements of the plurality of sound insulation plates 1. A RANSAC (RANdom SAmple Consensus) estimation value, an M estimation value, and the like can be given as examples of a robust estimation value. The RANSAC estimation value is an average value or a median value, calculated from the displacements of sound insulation plates 1, from which the effects of outliers are excluded by RANSAC estimation from the displacements of sound insulation plates 1. Deriver 20 derives the representative value by calculating the average value or median value from the displacement of each of the plurality of sound insulation plates 1. Note that in the Examples described later, an average value will be described as an example of the representative value.

Note that when the image captured of a plurality of sound insulation plates 1 contains a structure aside from sound insulation plate 1, deriver 20 may store the image in storage (not shown) having added a flag indicating that a structure aside from sound insulation plate 1 is present. At this time, deriver 20 may add the flag so that the plurality of sound insulation plates 1 located near the structure aside from sound insulation plate 1 can be identified. The structure aside from sound insulation plate 1 is, for example, a telephone pole, a sign, a signal box, or the like. When such a structure is disposed near sound insulation plate 1, the external load placed on that sound insulation plate 1 may be different from the external load placed on sound insulation plate 1 where there is no structure disposed nearby. Accordingly, adding a flag indicating that a structure aside from sound insulation plate 1 is present in the image to the image makes it possible for inspection device 100 to more accurately inspect sound insulation plate 1. Note that deriver 20 may add, to the image, a flag that differs depending on the type of the structure, so that the type of the structure can be identified.

Based on the displacement of each of the plurality of sound insulation plates 1, extractor 40 extracts, from the plurality of sound insulation plates 1, a sound insulation plate 1 of interest which moves differently from another sound insulation plate 1 among the plurality of sound insulation plates 1. For example, extractor 40 extracts sound insulation plate 1 having a displacement different from the representative value by at least a threshold from the plurality of sound insulation plates 1 as the sound insulation plate of interest. The threshold is determined based on a standard deviation of the displacements of the plurality of sound insulation plates 1. For example, the threshold may be a constant multiple of the standard deviation. Extractor 40 determines whether or not a difference between the displacement of each of the plurality of sound insulation plates 1 and the representative value is at least a threshold, and when the difference between the displacement of a given sound insulation plate 1 and the representative value is at least the threshold, extracts that sound insulation plate 1 as the sound insulation plate of interest. Extractor 40 stores information of the sound insulation plate of interest in storage (not shown), for example. Note that a basic processing flow of extractor 40 will be described later using an Example, and will therefore not be described here.

Note that when a flag indicating a structure has been added by deriver 20, extractor 40 may select images to which that flag is added from among the plurality of images obtained by obtainer 10, and then extract the sound insulation plate of interest that moves differently from another sound insulation plate among the plurality of sound insulation plates, by comparing the selected plurality of images with each other. To be more specific, of the plurality of sound insulation plates 1 captured in the plurality of images, all sound insulation plates 1 disposed near the structure may be selected, and the sound insulation plate of interest may be extracted based on the displacements of all of the selected sound insulation plates 1.

### 1-3. Operations of Inspection Device

An example of operations of inspection device 100 according to Embodiment 1 will be described next with reference to FIG. 3. FIG. 3 is a flowchart illustrating an example of operations performed by inspection device 100 according to Embodiment 1. Note that an image capturing step in which image capturing device 200 captures an image of a plurality of sound insulation plates 1 (see FIG. 1) is included as an operation of inspection system 300 according to Embodiment 1, performed before obtainment step S10 indicated in FIG. 3. In the image capturing step, image capturing device 200 captures an image of the plurality of sound insulation plates 1 when an external load acting on the plurality of sound insulation plates 1 is changing, for example. Accordingly, based on the image obtained by obtainer 10, deriver 20 can derive a displacement from before the external load has acted on the plurality of sound insulation plates 1, and a displacement in a period when the external load is acting on the plurality of sound insulation plates 1. This makes it possible to reduce the effect of error in situations where the plurality of sound insulation plates 1 are moving only slightly, the effect of error caused by blurring in image capturing device 200, and the like on the derivation of the displacement.

Note that the image of the plurality of sound insulation plates 1 may be at least one image captured by a plurality of image capturing devices 200 disposed in sequence at predetermined intervals along a series of the plurality of sound insulation plates 1, or may be at least one image captured by a plurality of image capturing devices 200 disposed non-sequentially at different points along a series of the plurality of sound insulation plates 1.

Note that a single image may contain at least three sound insulation plates 1. This increases the reliability of the representative value of the plurality of sound insulation plates 1, and thus inspection device 100 can accurately extract sound insulation plate 1 of interest that moves differently from another sound insulation plate 1 among the plurality of sound insulation plates 1.

As illustrated in FIG. 3, obtainer 10 obtains at least one image captured of the plurality of sound insulation plates 1 (obtainment step S10). Inspection device 100 may obtain images from image capturing device 200 sequentially, or may obtain images captured in a predetermined period. Note that inspection device 100 may obtain the at least one image captured of the plurality of sound insulation plates 1 from image capturing device 200 after the plurality of sound insulation plates 1 have been captured by image capturing device 200. The method through which obtainer 10 obtains the image is not particularly limited. As described above, obtainer 10 may obtain the image through wireless communication, or may obtain the image through removable memory such as USB memory.

Next, deriver 20 derives the displacement of each of the plurality of sound insulation plates 1 in the at least one image obtained by obtainer 10 in obtainment step S10 (deriving step S20). Note that the method for deriving the displacement has been described above, and will therefore not be described here.

Next, based on the displacement of each of the plurality of sound insulation plates 1, extractor 40 extracts, from the plurality of sound insulation plates 1, a sound insulation plate of interest that moves differently from another sound insulation plate 1 among the plurality of sound insulation plates 1 (extraction step S40). Note that details of extraction step S40 will be given later using an Example, and will therefore not be described here.

### 1-4. Example

An inspection method of the plurality of sound insulation plates 1 using inspection device 100 according to Embodiment 1 will be described in detail next using an Example.

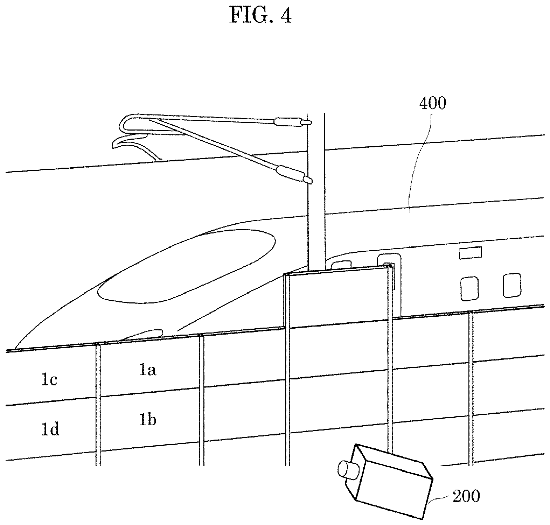

FIG. 4 is a diagram illustrating an example of image capturing device 200 capturing an image of the plurality of sound insulation plates 1. As shown in FIG. 4, image capturing device 200 captures an image of a plurality of sound insulation plates 1a, 1b, 1c, and 1d ("1a to 1d" hereinafter) during a period including a time when train 400 is exerting an external load on the plurality of sound insulation plates 1a to 1d. Here, the external load is wind pressure produced when train 400 passes. Image capturing device 200 captures the plurality of sound insulation plates 1a to 1d in a period, for example, from before the first car of train 400 approaches the plurality of sound insulation plates 1a to 1d to after the last car of train 400 finishes passing the plurality of sound insulation plates 1a to 1d.

Inspection device 100 obtains the image captured of the plurality of sound insulation plates 1a to 1d from image capturing device 200. The method of obtaining the image is not particularly limited, and inspection device 100 may obtain images sequentially from image capturing device 200 through wireless communication, or may obtain images through removable memory.

Next, inspection device 100 derives a displacement of each of the plurality of sound insulation plates 1a to 1d in the obtained image, and based on the derived displacement of each of the plurality of sound insulation plates 1a to 1d, extracts, from the plurality of sound insulation plates 1a to 1d, a sound insulation plate of interest that moves differently from another sound insulation plate among the plurality of sound insulation plates 1a to 1d.

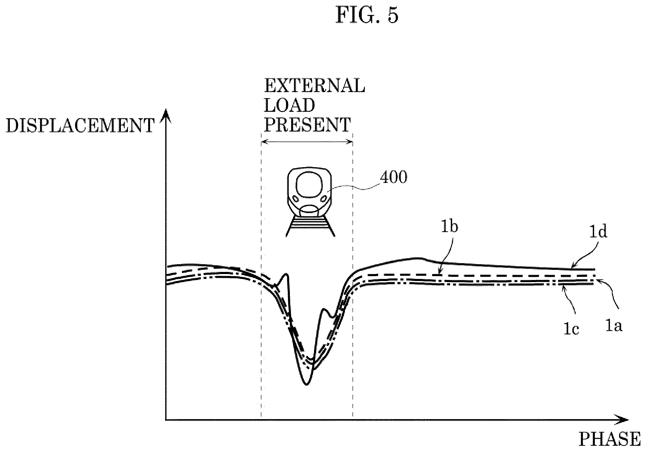

For example, inspection device 100 corrects shift between phases of the derived displacements of the plurality of sound insulation plates 1a to 1d, and compares the displacements of the plurality of sound insulation plates 1a to 1d. FIG. 5 is a diagram illustrating an example of timeseries data of the displacement of each of the plurality of sound insulation plates 1a to 1d when shift among the phases of the displacements of the sound insulation plates is corrected. From the graph in FIG. 5, it can be seen that of the plurality of sound insulation plates 1a to 1d, sound insulation plate 1a, sound insulation plate 1b, and sound insulation plate 1c are undergoing substantially the same displacement. However, sound insulation plate 1d displaces to the positive side when the other sound insulation plates 1a to 1c are displacing to the negative side, for example. In other words, it can be seen that sound insulation plate 1d moves differently from the other sound insulation plates 1a to 1c among the plurality of sound insulation plates 1a to 1d. Accordingly, inspection device 100 determines that sound insulation plate 1d is the sound insulation plate of interest that moves differently from the other sound insulation plates 1a to 1c, and extracts that sound insulation plate.

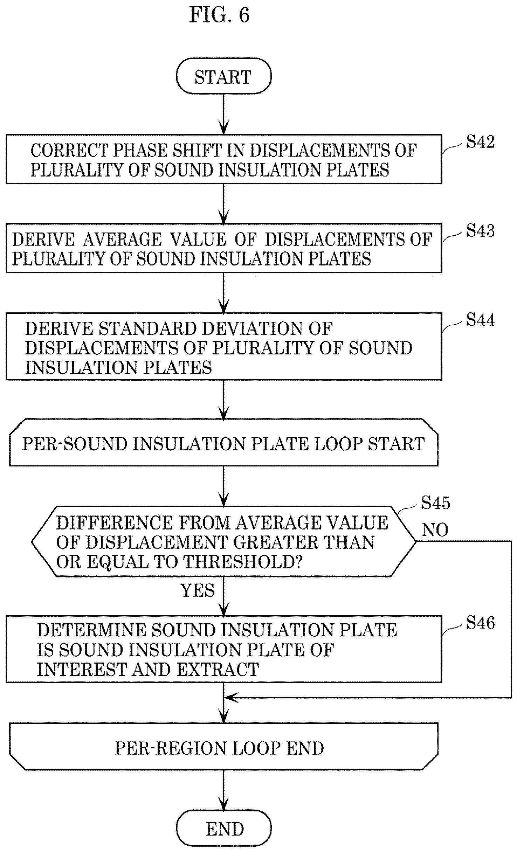

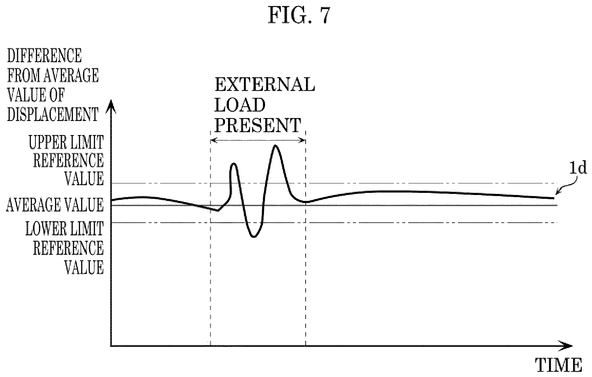

An example of the flow of processing included in extraction step S40 (see FIG. 3) will be described next. FIG. 6 is a flowchart illustrating an example of the detailed flow of processing included in extraction step S40 indicated in FIG. 3. FIG. 7 is a diagram illustrating an example of a difference between a displacement of one sound insulation plate 1d among the plurality of sound insulation plates 1a to 1d and an average value of displacements of the plurality of sound insulation plates 1a to 1d.

As illustrated in FIG. 6, extractor 40 of inspection device 100 (this will simply be called "inspection device 100" hereinafter) corrects shift among the phases of the displacements of the plurality of sound insulation plates 1a to 1d (step S42). Then, inspection device 100 derives an average value of the displacements of the plurality of sound insulation plates 1a to 1d (step S43). Next, inspection device 100 derives a standard deviation of the displacements of the plurality of sound insulation plates 1a to 1d (step S44), and determines a threshold based on the standard deviation. For example, the threshold is a constant multiple of the standard deviation. Here, as indicated in FIG. 7, an upper limit reference value is a value obtained by adding the threshold to the average value, and a lower limit reference value is a value obtained by subtracting the threshold from the average value.

Next, inspection device 100 determines, for each of the plurality of sound insulation plates 1a to 1d, whether or not a difference between the displacement of the sound insulation plate and the average value of the displacements of the plurality of sound insulation plates 1a to 1d is at least the threshold (step S45). If, for a given sound insulation plate among the plurality of sound insulation plates 1a to 1d, the difference between the displacement of that sound insulation plate and the average value of the displacements of the plurality of sound insulation plates 1a to 1d is at least the threshold (YES in step S45), that sound insulation plate is determined to be the sound insulation plate of interest, and is extracted (step S46). Specifically, in step S45, as indicated in FIG. 7, inspection device 100 derives a difference between the displacement of sound insulation plate 1d and the average value of the displacements of the plurality of sound insulation plates 1a to 1d, and determines whether or not that difference is a value exceeding a range between the lower limit reference value and the upper limit reference value, i.e., is at least the threshold. At this time, as indicated in FIG. 7, the difference between the displacement of sound insulation plate 1d and the average value of the displacements of the plurality of sound insulation plates 1a to 1d is at least the threshold, and thus inspection device 100 determines that the difference is at least the threshold for sound insulation plate 1d, and extracts that sound insulation plate. In this case, inspection device 100 stores the extracted sound insulation plate in storage (not shown) with a flag added thereto, for example. On the other hand, if, for a given sound insulation plate among the plurality of sound insulation plates 1a to 1d, the difference between the displacement of that sound insulation plate and the average value of the displacements of the plurality of sound insulation plates 1a to 1d is not at least the threshold (NO in step S45), inspection device 100 does not perform the processing of step S46.

Note that after the processing of step S45 and step S46, i.e., per-sound insulation plate loop processing, has been performed for all of the plurality of sound insulation plates 1a to 1d, inspection device 100 may read out the sound insulation plate determined to be the sound insulation plate of interest (sound insulation plate 1d, here) from the storage (not shown) and output that sound insulation plate to the display (not shown). At this time, the user may input an operation instruction to the inputter (not shown) and select the data to be output to the display (not shown) by inspection device 100, and may select data satisfying a predetermined condition from data displayed in the display (not shown).

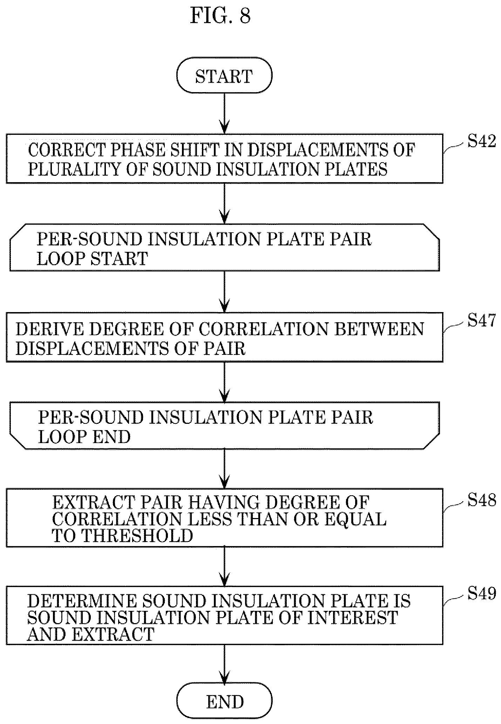

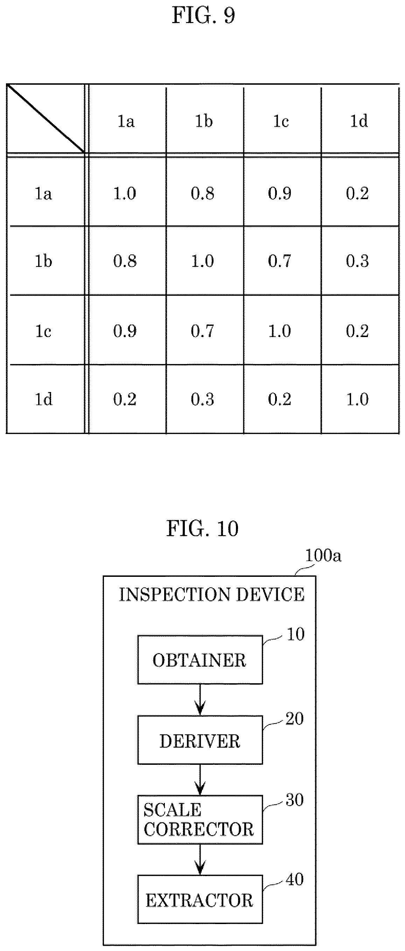

Another example of the flow of processing included in extraction step S40 (see FIG. 3) will be described next. FIG. 8 is a flowchart illustrating another example of the detailed flow of processing included in extraction step S40 indicated in FIG. 3. FIG. 9 is a diagram illustrating an example of a degree of correlation among displacements of the plurality of sound insulation plates 1a to 1d.

As illustrated in FIG. 8, inspection device 100 corrects shift among the phases of the displacements of the plurality of sound insulation plates 1a to 1d (step S42). Next, inspection device 100 derives a degree of correlation between the displacements of each of the plurality of sound insulation plates 1a to 1d and another sound insulation plate forming a pair (step S47). For example, inspection device 100 may derive a degree of correlation between the displacements at a phase for a predetermined interval, for each pair of sound insulation plates, and may take the lowest degree of correlation as the degree of correlation between the phases of that pair. At this time, as illustrated in FIG. 9, inspection device 100 stores the degree of correlation between the displacements of the pair of sound insulation plates in the storage (not shown) in table format, for example. Next, inspection device 100 extracts a pair for which the degree of correlation is less than the threshold (step S48). Note that the threshold for the degree of correlation may be set as desired in accordance with the shape, size, material, and so on of the sound insulation plates. Then, from the pair extracted in step S48, which has a degree of correlation less than the threshold, inspection device 100 specifies a sound insulation plate having a degree of correlation with the displacement of another sound insulation plate that is less than a threshold, and extracts the specified sound insulation plate as the sound insulation plate of interest (step S49). For example, when the threshold is 0.6, inspection device 100 specifies, from the table in FIG. 9, sound insulation plate 1d as the sound insulation plate having a degree of correlation with the range of another sound insulation plate that is less than the threshold, and extracts sound insulation plate 1d as the sound insulation plate of interest. At this time, inspection device 100 stores the extraction result in association with information of image data captured of sound insulation plate 1d in the storage (not shown), for example.

As described above, based on a cross-correlation of the displacements of the plurality of sound insulation plates 1a to 1d, inspection device 100 extracts, as the sound insulation plate of interest, a sound insulation plate (sound insulation plate 1d, here) having a degree of correlation with the displacement of another sound insulation plate that is less than a threshold.

Although the foregoing Example describes a situation in which the plurality of sound insulation plates 1a to 1d, which are adjacent to each other, are inspected using inspection device 100, it should be noted that the plurality of sound insulation plates to be inspected are not limited to sound insulation plates that are adjacent to each other. Additionally, some or all of a plurality of sound insulation plates included in a plurality of images may be inspected.

Additionally, the series of the plurality of sound insulation plates need not be adjacent to each other, and may be a series of sound insulation plates disposed along the same trajectory.

### 1-5. Effects, etc.

As described above, inspection device 100 according to Embodiment 1 includes: obtainer 10 that obtains at least one image captured of a plurality of sound insulation plates; deriver 20 that derives a displacement of each of the plurality of sound insulation plates in the image; and extractor 40 that, based on the displacement of each of the plurality of sound insulation plates, extracts, from the plurality of sound insulation plates, a sound insulation plate of interest that moves differently from another sound insulation plate among the plurality of sound insulation plates.

Through this, inspection device 100 can detect relative movement in each sound insulation plate among the plurality of sound insulation plates, from at least one image captured of the plurality of sound insulation plates. Accordingly, based on a displacement of each sound insulation plate in the image, inspection device 100 can extract, from the plurality of sound insulation plates, a sound insulation plate of interest that moves differently from another sound insulation plate, as a sound insulation plate that may be defective. As such, inspection device 100 according to Embodiment 1 can easily inspect a plurality of sound insulation plates.

For example, in inspection device 100 according to Embodiment 1, deriver 20 may further derive a representative value of the displacements of the plurality of sound insulation plates, and extractor 40 may extract, from the plurality of sound insulation plates, a sound insulation plate having a displacement different from the representative value by at least a threshold, as the sound insulation plate of interest.

Through this, inspection device 100 can find a difference between the displacement of each of the plurality of sound insulation plates and a representative value, and can compare that difference to a threshold. As such, inspection device 100 can easily extract a sound insulation plate of interest from the plurality of sound insulation plates, based on the displacement of each of the plurality of sound insulation plates.

For example, in inspection device 100 according to Embodiment 1, the representative value may be an average value or a median value of the displacements of the plurality of sound insulation plates, and the threshold may be determined based on a standard deviation of the displacements of the plurality of sound insulation plates.

Through this, inspection device 100 can easily and without complicated calculations derive the representative value of the displacements of the plurality of sound insulation plates and the threshold. This reduces the amount of processing performed by inspection device 100 and increases the speed of the processing performed by inspection device 100.

For example, in inspection device 100 according to Embodiment 1, based on a cross-correlation of the displacements of the plurality of sound insulation plates, extractor 40 may extract, as the sound insulation plate of interest, a sound insulation plate having a degree of correlation with the displacement of another sound insulation plate that is less than a threshold.

Through this, inspection device 100 can easily compare a similarity of a plurality of sound insulation plates. As such, inspection device 100 can easily extract a sound insulation plate of interest from the plurality of sound insulation plates, based on the displacement of each of the plurality of sound insulation plates.

For example, in inspection device 100 according to Embodiment 1, the image may be an image captured in a period including a time when a predetermined external load is acting on the plurality of sound insulation plates.

Through this, each of the plurality of sound insulation plates displaces sufficiently, which improves the accuracy at which the sound insulation plate of interest is extracted from the plurality of sound insulation plates.

### EMBODIMENT 2

### 2-1. Configuration of Inspection Device

An inspection device according to Embodiment 2 will be described next with reference to FIG. 10. FIG. 10 is a block diagram illustrating an example of the functional configuration of inspection device 100a according to Embodiment 2. Inspection device 100a according to Embodiment 2 differs from inspection device 100 according to Embodiment 1 in that inspection device 100a further includes scale corrector 30, and extractor 40 uses a displacement of each of the plurality of sound insulation plates which has been corrected by scale corrector 30. Hereinafter, inspection device 100a according to Embodiment 2 will be described, focusing on points different from Embodiment 1.

As illustrated in FIG. 10, inspection device 100a according to Embodiment 2 includes scale corrector 30 in addition to obtainer 10, deriver 20, and extractor 40. Scale corrector 30 corrects the displacement of each of the plurality of sound insulation plates in accordance with a distance from an image capturer that captures an image, which here is image capturing device 200 (see FIG. 1). For example, when ratios between a displacement in a captured image and a displacement in real space differ due to differences in the distances, in real space, from an image capturing position of image capturing device 200 to the plurality of sound insulation plates, scale corrector 30 performs scale correction as necessary so that the ratios are the same. This scale correction may be performed on the derived displacements, or on the captured images.

Extractor 40 extracts the sound insulation plate of interest that moves differently from another sound insulation plate using the displacement of each of the plurality of sound insulation plates on which the scale correction has been performed.

### 2-2. Operations of Inspection Device

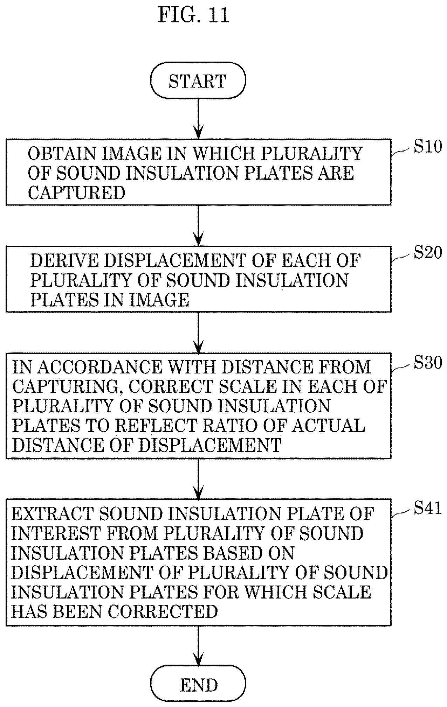

An example of operations of inspection device 100a according to Embodiment 2 will be described next with reference to FIG. 11. Note that as in Embodiment 1, an image capturing step in which image capturing device 200 captures an image of a plurality of sound insulation plates (see FIG. 1) is included as an operation of inspection system 300, performed before obtainment step S10 indicated in FIG. 11. Hereinafter, operations of inspection device 100 according to Embodiment 2 will be described, focusing on points different from Embodiment 1.

As illustrated in FIG. 11, obtainer 10 obtains at least one image captured of the plurality of sound insulation plates 1 (obtainment step S10). Next, deriver 20 derives the displacement of each of the plurality of sound insulation plates in the image obtained by obtainer 10 in obtainment step S10 (deriving step S20).

Next, in accordance with a distance from an image capturer (image capturing device 200, hereinafter) that captures the image, scale corrector 30 performs scale correction so as to reflect a ratio of a distance each of the plurality of sound insulation plates has actually displaced (scale correction step S30). In other words, in accordance with the distance of each of the plurality of sound insulation plates from image capturing device 200 that captures an image of the plurality of sound insulation plates, scale corrector 30 performs scale correction on the displacement of each of the plurality of sound insulation plates by adjusting a ratio between the displacement of each sound insulation plate in the image and the distance which the sound insulation plate has actually displaced. To be more specific, scale corrector 30 reads out information of the displacement of each of the plurality of sound insulation plates derived by deriver 20, e.g., coordinates in real space, from storage (not shown), and using the coordinates in real space which have been read out, performs scale correction for each of the plurality of sound insulation plates so that the ratio between the displacement in the image and the displacement in real space is the same. Note that when ratios between a displacement in a captured image and a displacement in real space differ due to differences in the distances, in real space, from an image capturing position of image capturing device 200 to a given sound insulation plate among the plurality of sound insulation plates, scale corrector 30 may perform scale correction as necessary so that the ratios are the same.

Next, extractor 40 extracts the sound insulation plate of interest from the plurality of sound insulation plates using the displacement of each of the plurality of sound insulation plates on which scale correction has been performed by scale corrector 30 (extraction step S41). Although Embodiment 2 differs from Embodiment 1 in that scale-corrected displacements are used, it should be noted that in other respects, the processing flow of extractor 40 is the same as the processing flow according to Embodiment 1, described with reference to FIGS. 6 and 8.

As described thus far, inspection device 100a according to Embodiment 2 obtains at least one image captured of a plurality of sound insulation plates; derives a displacement of each of the plurality of sound insulation plates in the obtained image; performs scale correction on the displacement of each of the plurality of sound insulation plates in accordance with a distance from image capturing device 200 which captured the image so as to reflect a ratio of the distance by which each of the plurality of sound insulation plates has actually displaced; and specifies a defective sound insulation plate by extracting, from the plurality of sound insulation plates, a sound insulation plate of interest, using the displacement of each of the plurality of sound insulation plates on which the scale correction has been performed.

Note that the processing of scale correction step S30 does not absolutely have to be performed after the processing of deriving step S20. For example, the processing of scale correction step S30 may be performed in parallel with the processing of deriving step S20.

Although Embodiment 2 describes an example of performing scale correction in accordance with a distance from image capturing device 200 to each of the sound insulation plates, the configuration is not limited thereto. For example, inspection device 100 may perform correction for eliminating influence of displacement in the image produced when the orientation of image capturing device 200 changes, or influence of displacement in the image produced when a rotational direction of image capturing device 200 changes.

Additionally, when the image captured of a plurality of sound insulation plates contains a structure aside from some insulation plates, inspection device 100 may store the image in storage (not shown) having added a flag indicating that a structure aside from sound insulation plates is present.

### 2-3. Effects, etc.

As described above, inspection device 100a according to Embodiment 2 further includes a scale corrector that, in accordance with a distance from an image capturer that captures the image, performs scale correction on the displacement of each of the plurality of sound insulation plates so as to reflect a ratio of a distance each of the plurality of sound insulation plates has actually displaced; and the extractor may extract the sound insulation plate of interest using the displacement of each of the plurality of sound insulation plates on which the scale correction has been performed.

Through this, inspection device 100a can more accurately derive the displacement of each of the plurality of sound insulation plates. Additionally, by having the above-described configuration, inspection device 100 uses a corrected displacement, which makes it possible to more accurately extract the sound insulation plate of interest from the plurality of sound insulation plates.

### OTHER EMBODIMENTS

Although an inspection device and an inspection method according to one or more aspects of the present disclosure have been described thus far based on embodiments, the present disclosure is not intended to be limited to these embodiments. Variations on the present embodiment conceived by one skilled in the art, embodiments implemented by combining constituent elements from different other embodiments, and the like may be included in the scope of one or more aspects of the present disclosure as well, as long as they do not depart from the essential spirit of the present disclosure.

For example, some or all of the constituent elements included in the inspection device according to the foregoing embodiments may be implemented by a single integrated circuit through system LSI (Large-Scale Integration). For example, the inspection device may be constituted by a system LSI circuit including the obtainer, the deriver, and the extractor.

"System LSI" refers to very-large-scale integration in which multiple constituent elements are integrated on a single chip, and specifically, refers to a computer system configured including a microprocessor, read-only memory (ROM), random access memory (RAM), and the like. A computer program is stored in the ROM. The system LSI circuit realizes the functions of the constituent elements by the microprocessor operating in accordance with the computer program.

Note that although the term "system LSI" is used here, other names, such as IC, LSI, super LSI, ultra LSI, and so on may be used, depending on the level of integration. Further, the manner in which the circuit integration is achieved is not limited to LSIs, and it is also possible to use a dedicated circuit or a general purpose processor. It is also possible to employ a Field Programmable Gate Array (FPGA) which is programmable after the LSI circuit has been manufactured, or a reconfigurable processor in which the connections and settings of the circuit cells within the LSI circuit can be reconfigured.

Further, if other technologies that improve upon or are derived from semiconductor technology enable integration technology to replace LSI circuits, then naturally it is also possible to integrate the function blocks using that technology. Biotechnology applications are one such foreseeable example.

Additionally, rather than such an inspection device, one aspect of the present disclosure may be an inspection method that implements the characteristic constituent elements included in the inspection device as steps. Additionally, aspects of the present disclosure may be realized as a computer program that causes a computer to execute the characteristic steps included in such an inspection method. Furthermore, aspects of the present disclosure may be realized as a computer-readable non-transitory recording medium in which such a computer program is recorded.

In the foregoing embodiment, the constituent elements are constituted by dedicated hardware. However, the constituent elements may be realized by executing software programs corresponding to those constituent elements. Each constituent element may be realized by a program executing unit such as a CPU or a processor reading out and executing a software program recorded into a recording medium such as a hard disk or semiconductor memory. Here, the software that realizes the inspection device and the like according to the foregoing embodiments is a program such as that described below.

In other words, this program causes a computer to execute an inspection method including: obtaining at least one image captured of a plurality of sound insulation plates; deriving a displacement of each of the plurality of sound insulation plates in the image; and extracting, from the plurality of sound insulation plates, and based on the displacement of each of the plurality of sound insulation plates, a sound insulation plate of interest that moves differently from another sound insulation plate among the plurality of sound insulation plates.

### INDUSTRIAL APPLICABILITY

The present disclosure can be broadly used in inspection devices that extract, from a plurality of sound insulation plates, a sound insulation plate of interest that moves differently from another sound insulation plate among the plurality of sound insulation plates.

### REFERENCE MARKS IN THE DRAWINGS

- 1, 1a, 1b, 1c, 1d: sound insulation plate
- 10: obtainer
- 20: deriver
- 30: scale corrector
- 40: extractor
- 100, 100a: inspection device
- 200: image capturing device
- 300: inspection system
- 400: train

## Claims

1. An inspection device, comprising:
an obtainer that obtains at least one captured image of a plurality of sound insulation plates;
a deriver that derives a displacement of each of the plurality of sound insulation plates in the image; and
an extractor that, based on the displacements of the plurality of sound insulation plates, extracts, from the plurality of sound insulation plates, a sound insulation plate of interest that moves differently from another sound insulation plate included in the plurality of sound insulation plates.

2. The inspection device according to claim 1,
wherein the deriver further derives a representative value of the displacements of the plurality of sound insulation plates, and
the extractor extracts, from the plurality of sound insulation plates, a sound insulation plate having a displacement different from the representative value by at least a threshold, as the sound insulation plate of interest.

3. The inspection device according to claim 2,
wherein the representative value is an average value or a median value of the displacements of the plurality of sound insulation plates, and
the threshold is determined based on a standard deviation of the displacements of the plurality of sound insulation plates.

4. The inspection device according to claim 1,
wherein based on a cross-correlation of the displacements of the plurality of sound insulation plates, the extractor extracts, as the sound insulation plate of interest, a sound insulation plate having a degree of correlation with the displacement of another sound insulation plate that is less than a threshold.

5. The inspection device according to any one of claims 1 to 4,
wherein the image is an image captured in a period including a time when a predetermined external load is acting on the plurality of sound insulation plates.

6. The inspection device according to any one of claims 1 to 5,
wherein the deriver derives the displacement of each of the plurality of sound insulation plates from two or more frames included in the image .

7. The inspection device according to any one of claims 1 to 6, further comprising:
a scale corrector that, in accordance with a distance from an image capturer that captures the image, corrects a scale of the displacement of each of the plurality of sound insulation plates so as to reflect a ratio of a distance by which each of the plurality of sound insulation plates has actually been displaced,
wherein the extractor extracts the sound insulation plate of interest using the displacement of each of the plurality of sound insulation plates whose scales have been corrected.

8. An inspection method, comprising:
obtaining at least one captured image of a plurality of sound insulation plates;
deriving a displacement of each of the plurality of sound insulation plates in the image; and
extracting, from the plurality of sound insulation plates, and based on the displacements of the plurality of sound insulation plates, a sound insulation plate of interest that moves differently from another sound insulation plate included in the plurality of sound insulation plates.
